# EUROPEAN PATENT SPECIFICATION

(11) **EP 3 206 950 B1**
(45) Date of publication and mention of the grant of the patent: **22.04.2020**
(21) Application number: 15851247.5
(22) Date of filing: 12.10.2015
(51) Int. Cl.: B64D 17/70, B64D 25/00, B64D 39/02, B64D 17/64, F41F 3/042, B64D 1/04, B64D 7/08, B64D 1/12

(54) **A METHOD AND AN APPARATUS TO SHOOT AN OBJECT FROM A FLYING APPARATUS**
VERFAHREN UND VORRICHTUNG ZUM SCHIESSEN EINES GEGENSTANDES AUS EINER FLIEGENDEN VORRICHTUNG
PROCÉDÉ ET APPAREIL POUR LANCER UN OBJET DEPUIS UN APPAREIL VOLANT

(30) Priority: 17.10.2014 FI 20140280
(43) Date of publication of application: 23.08.2017
(73) Proprietor: Skycat Oy, 30100 Forssa (FI)
(72) Inventor: HIISILÄ, Henri, 30100 Forssa (FI)
(74) Representative: Berggren Oy, Tampere
(86) International application number: PCT/FI2015/000036
(87) International publication number: WO 2016/059286

(56) References cited:
- US-A- 3 316 531
- US-A- 3 323 814
- US-A- 3 541 920
- US-A- 5 076 134
- US-A- 5 092 221
- US-A1- 2010 257 983
- US-A1- 2014 014 770
- US-B1- 6 460 445
- US-B1- 6 565 041

## Description

An object of this invention is a method according to claim 1, and an apparatus according to claim 3, for launching an object from a flying apparatus. A compression spring that has been loaded or is loaded in tension state is put in certain place, like a container comprising at least a bottom and a casing, in the flying apparatus and the compression spring is locked in this state with a fixing device and further, the object to be launched from the flying apparatus is placed as an extension of the spring in the container.

Such launch apparatuses comprising a spring within a container, a fixing device, a push member and an electric circuit are known from the documents US 5076134 A, US 3323814A and US 3541920 A.

Applications of the invention are such different flying and remote controlled devices like for instance multicopters and miniature planes from which there might be a need to launch a certain object during the flight.

As an example of this kind of launchable object a parachute or so called pilot-chute, having a function to draw out the actual parachute that has been fixed to it, may be mentioned. Launching of the parachute is needed when a defect occurs in the flying apparatus and there is a danger that it may fall to the ground. In situations in which this flying apparatus is flying above a crowd of people or a residential area it is especially important that it may be landed safely in defect situations with the help of a parachute. It is of cause reasonable to equip the flying apparatus with a parachute in order to get the flying apparatus down intact in problem situations.

The above described parachute or its pilot-chute is known to be fixed to the flying object in such a way that it, when needed, may be very quickly launched detached from the flying apparatus to hold it up and to slow down its fall. One known solution to take care of this is to arrange to the flying apparatus a container comprising a bottom and a casing and to load at the bottom of this container a compression spring with the help of a fixing device and to arrange a folded parachute to the container as an extension of the compression spring. When the need to launch the parachute appears the fixing device is detached from the spring and the spring force of the released spring pushes the parachute out from the container and detached from the flying apparatus. The parachute is fixed using bands, ropes or corresponding members to the flying apparatus and thus prevents the flying apparatus from fast falling.

Detachment of the above mentioned fixing device may be implemented for example by using different kind of mechanical launching apparatuses in which a certain movement of a certain component releases the spring. This movement may be accomplished by remote control or automatically for example by acceleration-, position- or pressure sensor or the like.

Another known way to launch the parachute is to explode a CO₂ charge behind it, whereupon the generated overpressure pushes the parachute out of its storage place.

The above disclosed techniques are in general use in the field.

As the greatest disadvantage relating to the technique based on detonation of charge may be regarded that many private non-professionals and hobby communities are operating in the field and that the handling of explosive charges always includes liabilities. Additionally, use of the explosives is very strictly regulated with different orders and thus it is very difficult to implement this technique without violating acts and regulations.

A great disadvantage of the methods based on the mechanical launching apparatus may be regarded to be their complexity and high purchase prices as well as problems relating to the reliability of operation.

An object of this invention is to achieve such a method and an apparatus for launching an object from a flying apparatus that disadvantages of the known technology are avoided. It is characteristic for the method according to the invention what has been presented in the characterizing parts of the claims 1 and 3.

As the greatest advantages of the invention may be regarded that the method and the apparatus according to it are very simple and of a low price to realize and that they are very reliable.

In this document, the term container refers to the space, the members limiting the space and other limiting elements of the space in which the object to be launched is stored. The casing refers to a certain other wall part of the mentioned space except the bottom. The terms containing the prefixes under- and upper- refer to the figures of this application but they do not define the sole operating position of the apparatus according to the invention, instead, the apparatus may be operational in different positions. The resistor refers to such an electric resistor that converts electricity into heat energy.

The invention is illustrated in detail in the enclosed figures in which
Figure 1 presents an apparatus according to the invention in a standby condition and seen from outside,
Figure 2 presents a cross-section being bisected lengthwise of the mentioned apparatus,
Figure 3 presents in more detail the area B of the mentioned apparatus as shown in Fig 2,
Figure 4 presents an embodiment of the fixing device of the apparatus according to the invention,
Figure 5, presents another embodiment of the fixing device,
Figure 6 presents an embodiment of the invention differing from the above mentioned ones.

In the following, a structure and operation of an advantageous embodiment of the invention is described by referring to the above mentioned figures.

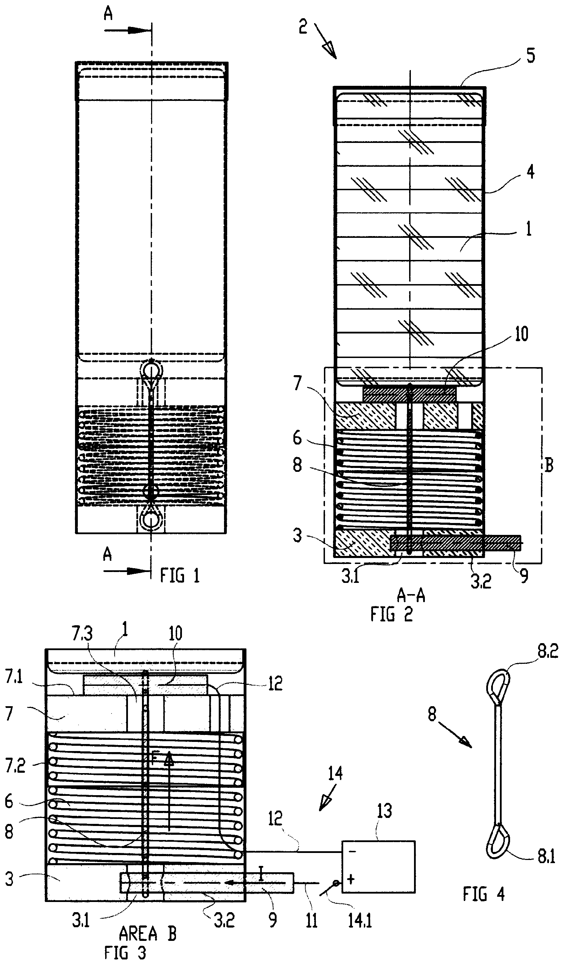

In figures 1- 3, schematically and as an example an apparatus according to the invention is illustrated. The apparatus has been presented in these figures as ready for operation and together with it also an object 1 to be launched has been presented. The object 1 in this example is a parachute and it may be seen in figure 2 that it has been placed inside the container 2, in its upper part. The bottom 3 of the container is a round disc, made of isolating and poorly electricity conducting material, middle of the disc comprises an opening 3.1 parallel with its center axis and circle of the disc comprises a hole 3.2 extending till said opening 3.1 and additionally slightly to the other side of it. The container has a cylindrical casing 4 and in this example a lid 5 has also been placed to the upper end of the casing. There is a spring 6 inside the container that in this example is a helical spring, and there has been installed against the upper end of the spring a push member 7 of the shape of a piston, round of its diameter, slide adapted with respect to the casing, which member also has been made of isolating and thus poorly electricity conducting material. The push member comprises a push surface 7.1 as well as a periphery 7.2 extending between the casing 4 and the spring 6, and middle of the push member comprises an opening 7.3 parallel with middle axis of the container. The spring 6 is a compression spring and it has been compressed against the bottom 3 of the container and locked to this tensioned position using a fixing device 8 so that the said fixing device combines together with a first locking member 9 and a second locking member 10 the bottom 3, the spring 6 and the push member 7. In this example, the fixing device 8 is (Fig 4) a thin metal wire and there are loops 8.1, 8.2 at its ends. The first locking member 9 is a metal pivot pushed into the hole 3.2 and the second locking member 10 is a metal pivot that has been placed against the push surface 7.1 of the push member. The loop 8.1 in the lower end of the fixing device 8 extends around the first locking member 9 and the other loop 8.2 at the upper end correspondingly extends around the second locking member 10 and thus the spring 6 is locked in tension state between the bottom 3 and the push member 7, whereupon a propulsive force F of the spring 6 causes a tensile stress of corresponding amount to the wire that is vertical in this example and operating as the fixing device 8. The fixing device 8 has been dimensioned so that its tensile strength T, that is the tensile strength of its material divided by the area unit (N/ mm²) multiplied by its total area (mm²), is greater than the propulsive force F of the spring being ready for operation.

In the apparatus according to the invention, a current cable 11 has been connected to the first locking member 9 and a current cable 12 to the second locking member 10. The said current cables have been connected to a power supply 13 of the flying apparatus, such as an accumulator or a battery. An electric circuit 14 created, that comprises the said current cables, locking members, fixing device and power supply, has been equipped with a switch 14.1 that keeps the electric circuit disconnected in normal situation. The electric circuit 14 may be connected with a remote control device or with an automatic device the way that has been described above. A short circuit has been prevented with the material selections of the other parts that are in contact with the electric circuit in the way that has been described above.

The method according to the invention functions so that when an object 1, such as a parachute is desired to be launched from the flying apparatus the switch 14.1 is connected with remote control or it gets connected by a signal coming from for example the acceleration-, position-, or pressure sensor or a corresponding device and then a current is formed in the electric circuit 14. As the current goes through the fixing device 8, the metal wire as the fixing device operates as an electric resistor and electric energy converts there into heat and a temperature of the fixing device raises. A current intensity I and a voltage U have been dimensioned so that the temperature of the fixing device 8 raises very rapidly, whereupon also the tensile strength of the material of the fixing device reduces rapidly and in an amount, that the propulsive force F (N) of the spring 6 gets higher than the tensile strength T (N) of the fixing device 8. The said tensile strength T thus is the tensile strength value (N/mm²) of the material of the fixing device at the breaking point multiplied by cross cut area (mm²) in question. In this case, the fixing device 8 breaks or gets melted broken and the propulsive force F of the spring gets released, whereupon the spring 6 pushes the push member 7 in front of it and the push member pushes the object 1 in front of it with the consequence that the object pushes a lid 5, which is situated loosely in its place, away from its place and the object gets launched from the container 2 and detached from the flying apparatus. When the object 1 is a parachute that is fixed to the flying apparatus the parachute opens and limits the speed of falling of the flying apparatus in a desired way.

The flying apparatus may be equipped for the next flight with a reloaded spring 6 in the container 2, with a new fixing device 8 and a re-packed object 1.

The object 1 may also be something else than a parachute. As an example, a serpentine reel or a group of these reels may be mentioned.

Also many other objects to be launched from a flying apparatus may be in question.

The container 2 may always be dimensioned according to the circumstance to be of a suitable size or shape. In the example above, it has been dimensioned suitable for a parachute of a multicopter, but it may also be implemented by having some other shape. Fixing the container to the flying apparatus may be implemented by any known method, so that the object that is thrown out has a free access to the outside air. In some cases, the container may also be without the lid 5.

The bottom 3 also has many ways to be implemented. It is central for it that the fixing device 8 may be supported to it either directly or through a locking member 9. One alternative that may be mentioned is the construction where the locking member 9 leans against the lower surface of the bottom 3 and the fixing device extends to it going through the whole bottom. In some cases, the fixing device 8 may be fixed directly to the bottom, whereupon the current cable 11 is fixed directly to it.

The spring 6 may in some cases be implemented differently from the above presented using for example the principle of a leaf spring. It is central that the spring force F is directed to the direction of the object 1 to be launched.

The push member 7 may be implemented in different variations but, however, always so that it is directed sufficiently well into the right direction by being pushed by the spring force F. In the example above, the periphery 7.2 of the push member directs the same way as a periphery of a piston to make it to move in the direction of the lengthwise axis of the container. The fixing device 8 may in some cases be fixed also directly to the push member 7, whereupon the current cable 12 is fixed directly to the fixing device 8. In some cases, the push member 7 may also be an end of the spring 6.

The fixing device 8 may be implemented in many different ways. It may be a cord, a wire, a bar, a strip or a corresponding member or a combination of the above mentioned or any object, that is or that has in it an electric resistor operating as a fuse or through which the electric current is conducted. The fixing device may also be assembled such that only a part of it belongs to the electric circuit 14, in which case the current is conducted only through this part and the breaking or melting happens then in this said part. As the material of the fixing device 8, it is possible to use steel, copper metal, aluminium or any other material that is sufficiently strong and electricity conducting.

The locking members 9, 10 may be implemented in many different known ways. It is not necessary that they belong to the electric circuit 14 if the circulation of the electricity via the fixing device is arranged in some other way than via the locking members. If the locking members belong to the electric circuit 14 the same rules apply to their material selection as has been told above in the case of fixing device 8.

It is possible to arrange the electric circuit 14 in the apparatus according to the invention also in such a way that the current flows to the fixing device 8 that is operating as a fuse or from there onwards along the spring 6. In this case, when dimensioning the spring, it is necessary to take into account the raise of the temperature caused by the current and through that the reduction of the strength of the material.

One embodiment of the invention is a solution in which a bottom 3, a tension spring 6, a push member 7 and a fixing device 8 together make up a prefabricated capsule that is placed inside the casing 4 and supported to its place in the lower part of the casing. In another embodiment of the same type, the bottom 3 in the capsule may be replaced with a separate laminar support part that is placeable under the spring, in which case the prefabricated capsule is placed against the bottom 3 of the container. After this, the current cables 11, 12 are connected to the apparatus so that the fixing device 8 or a part of it becomes a part of the electric circuit 14.

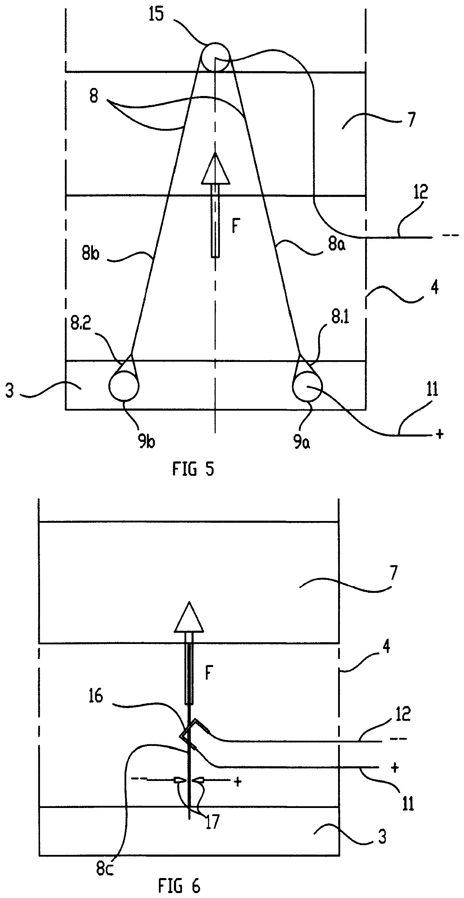

In the figure 5 one such embodiment of the invention in which the fixing device 8 is a wire or a corresponding member that has been fixed to the bottom 3 at two points via the locking members 9a, 9b and to the push member 7 at one point through the locking member 15 has been illustrated. The fixing device makes in this case the so called pulley setting, so that its first part 8a advances from the locking member 9a to the locking member 15 and after going around it its second part 8b advances from there to the locking member 9b. In that case the propulsive force F causes tensile loads to the said parts 8a, 8b the extents of which depend on the direction of these parts in relation to the direction of the propulsive force F. In this setting, it is possible to use in relation to the examples above a thinner fixing device or correspondently greater propulsive force F. The electric circuit may be set to advance according to the figure 5 so that only one of the parts of the fixing device, in this case the first part 8a, belongs to the electric circuit, whereupon the current advances along the current cable 11 from the power source to the locking member 9a and further along the first part 8a of the fixing device to the locking member 15 and from there onwards along the current cable 12 to the power source or vice versa. In this embodiment, it is possible to get the fixing device 8 to break with a relatively less electric power than in the embodiment of the same size having a fixing device of one part. This two part fixing device 8 may also be implemented so that the current is set to go through the whole fixing device, in other words from the locking member 9a via the locking member 15 to the locking member 9b. In these embodiments, it is easier to set the spring 6 tensioned compared to the earlier described embodiments. It should be noticed that in this solution model the parts 8a, 8b of the fixing device may possibly be essentially divergent in relation to the propulsive force F, in which case the tensile strength of the part to be broken of the fixing device 8 is reduced to be less than the tensile load caused by the propulsive force F. The fixing device 8 may be consisted of more than two parts of the mentioned kind.

The invention may also be applied in such a way that the fixing device to be broken is burned or melted broken using the temperature of the electric resistor that has been installed in connection to it or by the temperature of the electric arc formable between leads. In figure 6 a setting in which an electric resistor 16 is put against a fixing device 8c has been illustrated. This electric resistor is a so called permanent resistor which means that it may be used multiple times. When a current is conducted through the electric resistor 16, its temperature raises and this causes reduction in the tensile strength of the fixing device by heating, burning or melting it. Another above mentioned embodiment comparable with this is thus to place the leads 17 to replace the electric resistor 16, whereupon an electric arc between the leads is formed when the electric circuit is connected. In this case, the electric energy of the electric arc damages the fixing device 8c and the fixing device breaks when its tensile strength is reduced below the propulsive force F of the spring or below the tensile load caused to the fixing device by the propulsive force. The fixing device 8c may be a cord, a wire, a bar, a strip, a string, a line that conducts electricity well or poorly, or a corresponding member or a combination of the before listed or any member the strength of which may be reduced in the above mentioned way.

The used intensity I and the voltage U of the electric current may in all cases be set application-specific and case-specific advantageously so that the energy that is needed for breaking the fixing device 8, 8c may be achieved sufficiently quickly.

It should be noticed that even though this description is limited to certain kind of advantageous example embodiments of the invention, it is not, however, desired to limit the use of the invention to only this kind of examples, instead, many variations are possible within the inventive idea specified by the claims.

## Claims

1. A method for launching an object (1) from a flying apparatus according to which method:
a. to a container (2), belonging to the flying apparatus, wherein the container comprises at least a bottom (3) and a casing (4), a spring (6) is placed against said bottom, which spring is a compression spring and has been loaded or is loaded into a tension state so that its propulsive force (F) is directed to the direction of the object (1),
b. said tension state of the spring (6) is locked or has earlier been locked by a fixing device (8) so that a tensile load caused by the propulsive force (F) is directed to the fixing device,
c. the object (1) to be launched is placed into the container (2) as an extension of the spring,
d. the fixing device (8) is a cord, a wire, a bar, a strip, a string, a line or some combination of them and its tensile strength (T) is greater than a tensile load caused by the propulsive force (F) of the spring to said fixing device,
e. the tensile strength (T) of the fixing device (8) is reduced to be less than said tensile load by heating, burning or melting said fixing device (8) using electric energy,
f. the fixing device (8) breaks, the spring (6) expands into the direction of the object (1) and the propulsive force (F) of the spring pushes the object (1) out of the container (2) and detached from the flying apparatus,
wherein an electric current is conducted through a part of the fixing device (8) to be broken that is of electricity conducting material, whereupon electric energy converts into heat energy in the fixing device (8) and the temperature of the part of said fixing device to be broken raises in an amount that its tensile strength (T) decreases below the tensile load caused by the propulsive force (F) of the spring (6) to said part; or
in that leads (17) are installed in connection to the fixing device (8c) and electricity is conducted via the leads, whereupon an electric arc is formed between the leads, heat energy of the electric arc heats, burns, or melts the part to be broken of the fixing device (8c) in an amount that its tensile strength (T) decreases below the tensile load caused by the propulsive force (F) of the spring (6) to said part.

2. The method according to the claim 1, **characterized in that** the bottom (3) of the container and the push member (7) are made of isolating, poorly electricity conducting material.

3. An apparatus for launching an object (1) from a flying apparatus, which apparatus has
- a container (2) comprising at least a bottom (3) and a casing (4),
- a push member (7) in the container,
- a compression spring (6) tensioned between the push member and the bottom and arranged to expand into the direction of the object (1),
- a fixing device (8, 8c) that has been installed to maintain the propulsive force (F) of the compression spring, the fixing device (8, 8c) being a cord, a wire, a bar, a strip, a string, a line or some combination of them,
- an electric circuit (14) has been arranged via the fixing device (8) or the fixing device (8c) has been installed between the leads (17) that belong to the electric circuit, such that in either case out of the electricity of the electric circuit it is possible to generate heat energy in an amount that it is able to reduce the tensile strength (T) of the fixing device (8, 8c) to the extent that the tension strength of the fixing device is reducible below the tension load of the propulsive force (F) of the compression spring (6), and
- the object (1) to be launched is placeable into the container (2) as an extension of the compression spring (6).

4. The apparatus according to the claim 3 **characterized in that** the casing is a cylinder.

5. The apparatus according to the claim 3 or 4 **characterized in that** the spring (6) is a helical spring.

6. The apparatus according to any of the claims 3- 5 **characterized in that** the electric circuit (14) comprises at least a part of the fixing device (8), locking members (9, 10), current cables (11, 12) and a power supply (13) and that it is equipped with a switch (14.1).

7. The apparatus according to the claim 6 **characterized in that** the switch (14.1) has been arranged to connect the electric circuit (14) automatically by a signal coming from the acceleration-, position-, or pressure sensor or by remote control.

## Patentansprüche

1. Verfahren zum Abschießen eines Gegenstandes (1) aus einem Fluggerät, wobei gemäß dem Verfahren:
a. an einem zu dem Fluggerät gehörenden Behälter (2), der mindestens ein Unterteil (3) und einen Mantel (4) umfasst, eine Feder (6) gegen das Unterteil angeordnet wird, wobei diese Feder eine Druckfeder ist und so durch Belastung in einen Spannungszustand gebracht wurde oder gebracht wird, dass ihre Treibkraft (F) in die Richtung des Gegenstandes (1) gerichtet ist;
b. der Spannungszustand der Feder (6) von einer Befestigungsvorrichtung (8) so arretiert wird oder früher arretiert wurde, dass eine von der Treibkraft (F) verursachte Zugbelastung auf die Befestigungsvorrichtung gerichtet ist;
c. der abzuschießende Gegenstand (1) in dem Behälter (2) als Verlängerung der Feder angeordnet wird;
d. die Befestigungsvorrichtung (8) eine Schnur, ein Draht, ein Stab, ein Band, ein Bindfaden, eine Leitung oder eine beliebige Kombination aus ihnen ist und ihre Zugfestigkeit (T) größer ist als eine von der Treibkraft (F) der Feder verursachte Zugbelastung auf die Befestigungsvorrichtung;
e. die Zugfestigkeit (T) der Befestigungsvorrichtung (8) durch Erwärmen, Durchbrennen oder Schmelzen der Befestigungsvorrichtung (8) unter Verwendung elektrischer Energie verringert wird, um niedriger als die Zugbelastung zu werden;
f. die Befestigungsvorrichtung (8) zerbricht, die Feder (6) sich in die Richtung des Gegenstandes (1) durch Entlastung entspannt und die Treibkraft (F) der Feder den Gegenstand (1) aus dem Behälter (2) schiebt und vom Fluggerät abtrennt;
wobei ein elektrischer Strom durch einen aus elektrisch leitendem Material bestehenden Teil der zu zerbrechenden Befestigungsvorrichtung (8) geleitet wird, woraufhin sich in der Befestigungsvorrichtung (8) elektrische Energie in Wärmeenergie umwandelt und sich die Temperatur des Teils der zu zerbrechenden Befestigungsvorrichtung in einem Maße erhöht, dass seine Zugfestigkeit (T) bis unterhalb der von der Treibkraft (F) der Feder (6) an dem Teil verursachten Zugbelastung abnimmt; oder
Anschlussdrähte (17) in Verbindung mit der Befestigungsvorrichtung (8c) installiert werden und Strom über die Anschlussdrähte geleitet wird, woraufhin ein Lichtbogen zwischen den Anschlussdrähten ausgebildet wird, die Wärmeenergie des Lichtbogens den zu zerbrechenden Teil der Befestigungsvorrichtung (8c) in einem Maße erwärmt, durchbrennt oder schmilzt, dass seine Zugfestigkeit (T) bis unterhalb der von der Treibkraft (F) der Feder (6) an dem Teil verursachten Zugbelastung abnimmt.

2. Verfahren nach Anspruch 1, **dadurch gekennzeichnet, dass** das Unterteil (3) des Behälters und das Schiebeelement (7) aus isolierendem, schlecht stromleitendem Material hergestellt sind.

3. Gerät zum Abschießen eines Gegenstandes (1) aus einem Fluggerät, dessen Gerät Folgendes aufweist:
- einen Behälter (2), der mindestens ein Unterteil (3) und einen Mantel (4) umfasst;
- ein Schiebeelement (7) in dem Behälter;
- eine Druckfeder (6), die zwischen dem Schiebeelement und dem Unterteil gespannt und dazu anordnet ist, sich in der Richtung des Gegenstandes (1) durch Entspannung auszudehnen;
- eine Befestigungsvorrichtung (8, 8c), die eingebaut wurde, um die Treibkraft (F) der Druckfeder aufrechtzuerhalten, wobei die Befestigungsvorrichtung (8, 8c) eine Schnur, ein Draht, ein Stab, ein Band, ein Bindfaden, eine Leitung oder eine beliebige Kombination aus ihnen ist;
- wobei ein Stromkreis (14) mittels der Befestigungsvorrichtung (8) angeordnet wurde oder die Befestigungsvorrichtung (8c) zwischen den zum Stromkreis gehörenden Anschlussdrähten (17) so installiert wurde, dass es in beiden Fällen ausgehend von dem Strom des Stromkreises möglich ist, Wärmeenergie in einem Maße zu erzeugen, die in der Lage ist, die Zugfestigkeit (T) der Befestigungsvorrichtung (8, 8c) in dem Ausmaß zu verringern, dass die Zugfestigkeit der Befestigungsvorrichtung bis unterhalb der Zugbelastung der Treibkraft (F) der Druckfeder (6) reduzierbar ist; und
- der sich abzuschießende Gegenstand (1) in dem Behälter (2) als Verlängerung der Druckfeder (6) anordnen lässt.

4. Gerät nach Anspruch 3, **dadurch gekennzeichnet, dass** der Mantel ein Zylinder ist.

5. Gerät nach Anspruch 3 oder 4, **dadurch gekennzeichnet, dass** die Feder (6) eine Schraubenfeder ist.

6. Gerät nach einem der Ansprüche 3-5, **dadurch gekennzeichnet, dass** der Stromkreis (14) mindestens einen Teil der Befestigungsvorrichtung (8), der Arretierelemente (9,10), der Stromkabel (11, 12) und einer Stromversorgung (13) umfasst und dass er mit einem Schalter (14.1) versehen ist.

7. Gerät nach Anspruch 6, **dadurch gekennzeichnet, dass** der Schalter (14.1) dazu angeordnet wurde, automatisch durch ein von dem Beschleunigungs-, Positions- oder Drucksensor kommendes Signal oder mithilfe der Fernsteuerung einen Anschluss des Stromkreises herzustellen.

## Revendications

1. Procédé pour lancer un objet (1) depuis un appareil volant selon lequel procédé :
a. d'un conteneur (2), appartenant à l'appareil volant, dans lequel le conteneur comprend au moins un fond (3) et un caisson (4), un ressort (6) est placé contre ledit fond, lequel ressort est un ressort de compression et a été chargé ou est chargé dans un état de tension tel que sa force propulsive (F) est dirigée dans la direction de l'objet (1),
b. ledit état de tension du ressort (6) est verrouillé ou a été verrouillé antérieurement par un mécanisme de fixation (8) de sorte que la charge de traction causée par la force propulsive (F) est dirigée vers le mécanisme de fixation,
c. l'objet (1) à lancer est placé dans le conteneur (2) comme une extension du ressort,
d. le mécanisme de fixation (8) est une corde, un câble, une barre, une bande, un cordon, une ligne ou une combinaison de ces éléments et sa résistance à la traction (T) est supérieure à la charge de traction causée par la force propulsive (F) du ressort vers ledit mécanisme de fixation,
e. la résistance à la traction (T) du mécanisme de fixation (8) est réduite de sorte à être inférieure à ladite charge de traction par chauffage, brûlage ou fusion dudit mécanisme de fixation (8) en utilisant de l'énergie électrique,
f. le mécanisme de fixation (8) se casse, le ressort (6) se dilate dans la direction de l'objet (1) et la force propulsive (F) du ressort pousse l'objet (1) en dehors du conteneur (2) et le détache de l'appareil volant,
dans lequel,
un courant électrique est conduit à travers une partie en matériau électriquement conducteur du mécanisme de fixation (8) qui doit être cassé, après quoi l'énergie électrique est convertie en énergie calorique dans le mécanisme de fixation (8) et la température de la partie dudit mécanisme de fixation qui doit être cassé s'élève de sorte que sa résistance à la traction (T) diminue en dessous de la charge de traction causée par la force propulsive (F) du ressort (6) vers ladite partie ; ou
en ce que des guides (17) sont installés en connexion avec le mécanisme de fixation (8c) et l'électricité est conduite via les guides, après quoi un arc électrique est formé entre les guides, l'énergie calorique de l'arc électrique chauffe, brûle ou fond la partie qui doit être cassée du mécanisme de fixation (8c) de sorte que sa résistance à la traction (T) diminue en dessous de la charge de traction causée par la force propulsive (F) du ressort (6) vers ladite partie.

2. Procédé selon la revendication 1, **caractérisé en ce que** le fond (3) du conteneur et l'élément poussoir (7) sont constitués de matériaux isolants, faiblement électro-conducteurs.

3. Appareil pour lancer un objet (1) depuis un appareil volant, lequel appareil possède
- un conteneur (2) comprenant au moins un fond (3) et un caisson (4),
- un élément poussoir (7) dans le conteneur,
- un ressort de compression (6) en tension entre l'élément poussoir et le fond, conçu pour se dilater dans la direction de l'objet (1),
- un mécanisme de fixation (8, 8c) qui a été installé pour conserver la force propulsive (F) du ressort de compression, le mécanisme (8, 8c) étant une corde, un câble, une barre, une bande, un cordon, une ligne ou une combinaison de ces éléments,
- un circuit électrique (14) a été disposé via le mécanisme de fixation (8) ou le mécanisme de fixation (8c) a été installé entre les guides (17) qui appartiennent au circuit électrique de sorte que dans les deux cas, il est possible de générer de l'énergie électrique à partir de l'électricité du circuit électrique dans une quantité qui permet de réduire la résistance à la traction (T) du mécanisme de fixation (8, 8c) jusqu'à ce que la résistance à la traction du mécanisme de fixation soit réductible en dessous de la charge de traction de la force propulsive (F) du ressort de compression (6), et
- l'objet (1) à lancer est logeable dans le conteneur (2) comme une extension du ressort de compression (6).

4. Appareil selon la revendication 3, **caractérisé en ce que** le caisson est un cylindre.

5. Appareil selon la revendication 3 ou 4, **caractérisé en ce que** le ressort (6) est un ressort hélicoïdal.

6. Appareil selon l'une quelconque des revendications 3 à 5, **caractérisé en ce que** le circuit électrique (14) comprend au moins une partie du mécanisme de fixation (8), des éléments de fixation (9, 10), des câbles électriques (11, 12) et une alimentation électrique (13) et qui est équipé d'un interrupteur (14.1).

7. Appareil selon la revendication 6, **caractérisé en ce que** l'interrupteur (14.1) a été conçu pour se connecter au circuit électrique (14) automatiquement par un signal issu du capteur d'accélération/position ou pression ou par une commande à distance.
